# EUROPÄISCHE PATENTSCHRIFT

(11) **EP 2 443 175 B1**
(45) Veröffentlichungstag und Bekanntmachung des Hinweises auf die Patenterteilung: **19.11.2014**
(21) Anmeldenummer: 10725400.5
(22) Anmeldetag: 17.06.2010
(51) Int. Cl.: C08G 73/18

(54) **POLYAZOL-HALTIGE ZUSAMMENSETZUNG**
COMPOSITION CONTAINING POLYAZOLE
COMPOSITION CONTENANT DU POLYAZOL

(30) Priorität: 20.06.2009 EP 09008110
(43) Veröffentlichungstag der Anmeldung: 25.04.2012
(73) Patentinhaber: BASF SE, 67056 Ludwigshafen (DE)
(72) Erfinder: BELACK, Jörg, 55129 Mainz (DE); LEITNER, Klaus, 67059 Ludwigshafen (DE); SCHMIDT, Thomas, 5303 Würenlingen (CH); CHRIST, Gunter, 65582 Diez (DE); BERNSTORFF, Bernd-Steffen von, 67157 Wachenheim (DE)
(74) Vertreter: Mai, Dörr, Besier
(86) Internationale Anmeldenummer: PCT/EP2010/003670
(87) Internationale Veröffentlichungsnummer: WO 2010/145827

(56) Entgegenhaltungen:
- WO-A1-99/04445
- WO-A1-02/088219
- WO-A1-2008/031554
- WO-A2-03/022412

## Beschreibung

Die vorliegende Erfindung betrifft eine Polyazol-haltige Zusammensetzung in Form einer Lösung und/oder Dispersion, ein Verfahren zu ihrer Herstellung sowie ihre Verwendung, insbesondere zur Herstellung von Membran-Elektroden-Einheiten für Brennstoffzellen.

Polymer-Elektrolyt-Membranen (PEM) sind bereits bekannt und werden insbesondere in Brennstoffzellen eingesetzt. Dabei finden häufig Sulfonsäuremodifizierte Polymere, insbesondere perfluorierte Polymere Anwendung. Prominentes Beispiel hierfür ist Nafion™ von DuPont de Nemours, Willmington USA. Für die Protonenleitung ist ein relativ hoher Wassergehalt in der Membran erforderlich, der typischerweise bei 4 - 20 Molekülen Wasser pro Sulfonsäuregruppe liegt. Der notwendige Wassergehalt, aber auch die Stabilität des Polymers in Verbindung mit saurem Wasser und den Reaktionsgasen Wasserstoff und Sauerstoff, limitiert die Betriebstemperatur der PEM-Brennstoffzellenstacks üblicherweise auf 80 - 100 °C. Unter Druck kann die Betriebstemperatur auf >120°C erhöht werden. Ansonsten können höhere Betriebstemperaturen ohne einen Leistungsverlust der Brennstoffzelle nicht realisiert werden.

Aus systemtechnischen Gründen sind aber höhere Betriebstemperaturen als 100 °C in der Brennstoffzelle wünschenswert. Die Aktivität der in der Membran-Elektroden-Einheit (MEE) enthaltenen Katalysatoren auf Edelmetallbasis ist bei hohen Betriebstemperaturen wesentlich besser. Insbesondere sind bei der Verwendung von sogenannten Reformaten aus Kohlenwasserstoffen deutliche Mengen an Kohlenmonoxid im Reformergas enthalten, die üblicherweise durch eine aufwendige Gasaufbereitung bzw. Gasreinigung entfernt werden müssen. Bei hohen Betriebstemperaturen steigt die Toleranz der Katalysatoren gegenüber den CO-Verunreinigungen bis auf mehrere Vol.-% CO an.

Des Weiteren entsteht Wärme beim Betrieb von Brennstoffzellen. Eine Kühlung dieser Systeme auf unter 80°C kann jedoch sehr aufwendig sein. Je nach Leistungsabgabe können die Kühlvorrichtungen wesentlich einfacher gestaltet werden. Das bedeutet, dass in Brennstoffzellensystemen, die bei Temperaturen über 100°C betrieben werden, die Abwärme deutlich besser nutzbar gemacht und somit die Brennstoffzellensystem-Effizienz durch Strom-Wärmekopplung gesteigert werden kann.

Um diese Temperaturen zu erreichen, werden im Allgemeinen Membranen mit neuen Leitfähigkeitsmechanismen verwendet. Ein Ansatz hierfür ist der Einsatz von Membranen, die ohne den Einsatz von Wasser eine elektrische Leitfähigkeit zeigen. Eine erste Entwicklung in diese Richtung wird beispielsweise WO 96/13872 aufgezeigt. So offenbart WO 96/13872 die Verwendung von säuredotierten Polybenzimidazol-Membranen, die durch ein Gießverfahren hergestellt werden.

Aus WO 2008/031554 und WO 03/022412 sind allgemeine Verfahren zur Herstellung von protonenleitenden Polyazolmembranen bekannt. Darüber hinaus ist aus WO 99/04445 ein Verfahren zur Herstellung von Polybenzimidazolpasten oder -gelen bekannt.

Eine neue Generation von säurehaltigen Polyazol-Membranen, die ebenfalls ohne den Einsatz von Wasser eine elektrische Leitfähigkeit zeigen, wird in der WO 02/088219 beschrieben. Diese Anmeldung offenbart eine protonenleitende Polymermembran auf Basis von Polyazolen, die durch ein Verfahren, umfassend die folgenden Schritte, erhältlich ist
A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion,
B) Aufbringen einer Schicht unter Verwendung der Mischung gemäß Schritt A) auf einem Träger, ggf. auf einer Elektrode,
C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren,
D) Behandlung der in Schritt C) gebildeten Membran bis diese selbsttragend ist, bevorzugt durch partielle Hydrolyse.

Die in Schritt A) verwendete Polyphosphorsäure weist üblicherweise einen Gehalt, berechnet als P₂O₅ (acidimetrisch), von mindestens 83% auf.

Zur Einstellung der Viskosität kann die Lösung ggf. mit Phosphorsäure (konz. Phosphorsäure, 85%) versetzt werden.

In den Beispielen werden zahlreiche Synthesen in einer Polyphosphorsäure beschrieben, die einen Gehalt, berechnet als P₂O₅ (acidimetrisch), von 83,4% aufweist. Manche der Ansätze werden mit konz. Phosphorsäure verdünnt.

Der Gehalt der resultierenden Lösungen, berechnet als P₂O₅ (acidimetrisch), beträgt entweder höchstens 70,487752 % (=theoretische H₃PO₄-Konzentration: 97,3%; Beispiel 5) oder mindestens 75,465388 % (=theoretische H₃PO₄-Konzentration: 104,2%; Beispiel 3).

Die intrinsische Viskosität der Polymere bei 30°C ist 2,9 dL/g oder weniger.

Die in der WO 02/088219 offenbarten, säurehaltigen Polyazol-Membranen zeigen an sich ein günstiges Eigenschaftsprofil und eignen sich insbesondere für eine Verwendung in Membran-Elektroden-Einheiten für Brennstoffzellen.

Allerdings weisen die in Schritt A) erhältlichen Lösungen und/oder Dispersionen insbesondere für relativ hohe Feststoffgehalte eine hohe Viskosität auf. Gleiches gilt für die durch Polymerisation der Monomere erhältliche Polymerlösungen oder -dispersion, wobei die Viskosität der Lösung oder Dispersionen mit steigendem Polymerisationsgrad weiter ansteigt.

Die Verarbeitung der Lösungen oder Dispersionen erfordert daher häufig höhere Temperaturen. Hierbei hat man jedoch mit dem Problem zu kämpfen, dass die Viskosität der Lösungen und/oder Dispersionen oberhalb 170°C mit der Zeit stetig weiter zunimmt.

Weiterhin verläuft die Hydrolyse in Schritt D) relativ langsam. Darüber hinaus ist die Herstellung von dünnen und/oder defektfreien Membranen bzw. selbstragenden Filmen/flächigen Gebilden nur schwer möglich.

Schließlich sind Membranen mit besseren mechanischen Eigenschaften, insbesondere einer höheren Zugfestigkeit und einer verbesserten mechanischen Stabilität, wünschenswert.

Aufgabe der vorliegenden Erfindung war daher, Möglichkeiten zur Verbesserung des Herstellungsverfahrens derartiger Polyazol-Membranen sowie Wege zur leichteren und effizienteren Weiterverarbeitung derartiger Polyazol-Membranen, insbesondere bei der Herstellung von Membran-Elektroden-Einheiten, bevorzugt für Brennstoffzellen, aufzuzeigen. Insbesondere wurden eine Verarbeitbarkeit bei niedrigeren Temperaturen, eine schnellere Hydrolyse und die Möglichkeit der Herstellung möglichst dünner und möglichst defektfreier Membranen angestrebt. Weiterhin sollten die Membranen möglichst verbesserte Eigenschaften, wie überlegene mechanischen Eigenschaften, insbesondere eine höhere Zugfestigkeit und/oder eine verbesserte mechanische Stabilität, aufweisen. Dabei sollten die angestrebten Vorteile und Effekte auf möglichst einfache Art und Weise, großtechnisch und kostengünstig realisiert werden können.

Gelöst werden diese Aufgaben durch die Bereitstellung einer Zusammensetzung mit allen Merkmalen des Anspruchs 1. Besonders zweckmäßige Ausgestaltungen der erfindungsgemäßen Zusammensetzung werden in den abhängigen Unteransprüchen beschrieben. Weiterhin werden besonders zweckmäßige Verfahren zur Herstellung und zur Anwendung der erfindungsgemäßen Zusammensetzung unter Schutz gestellt.

Gegenstand der vorliegenden Erfindung ist dementsprechend eine Zusammensetzung in Form einer Lösung und/oder Dispersion, gemäß Anspruch 1

Die erfindungsgemäße Zusammensetzung zeichnet sich im Vergleich mit den bekannten Zusammensetzungen durch eine geringere Viskosität bei gleichem Feststoffgehalt aus. Sie erlaubt eine bessere Verarbeitung, insbesondere bei niedrigeren Temperaturen, eine schnellere Hydrolyse und insbesondere die Herstellung dünner, defektfreier Membranen und selbstragender Filme. Dabei ist die Zumischung von Additiven, wie z. B. Vernetzer, Füllstoffe o. ä., ohne signifikante Beeinflussung der Fließeigenschaften der Zusammensetzung möglich. Weiterhin weisen die resultierenden Membranen deutlich verbesserte Eigenschaften, wie überlegene mechanischen Eigenschaften, insbesondere eine höhere Zugfestigkeit und/oder eine verbesserte mechanische Stabilität, auf. Dabei können die erfindungsgemäßen Vorteile und Effekte auf vergleichsweise einfache Art und Weise, großtechnisch und kostengünstig realisiert werden.

Die erfindungsgemäße Zusammensetzung enthält vorzugsweise mindestens ein Polyalzol. Unter Polyazolen im Sinne der vorliegenden Erfindung werden solche Polymere verstanden, bei denen die Wiederholungseinheit im Polymer vorzugsweise mindestens einen aromatischen Ring mit mindestens einem Stickstoffatom enthält. Bei dem aromatischen Ring handelt es sich vorzugsweise um einen fünf- oder sechsgliedrigen Ring mit einem bis drei Stickstoffatomen, der mit einem anderen Ring, insbesondere einem anderen aromatischen Ring, anelliert sein kann. Einzelne Stickstoff-Heteroatome können dabei auch durch Sauerstoff-, Phosphor- und/oder Schwefel-Atome ersetzt sein. Die heterocyclischen aromatischen Ringe liegen vorzugsweise in der Polymerhauptkette vor, können jedoch auch in der Seitenkette vorliegen. Besonders bevorzugt werden solche basischen Polymere, die in der Wiederholungseinheit ungesättigte fünfgliedrige oder sechsgliedrige aromatische Einheiten umfassen, die im Kern 1-5 Stickstoffatome oder neben Stickstoffatomen ein oder mehrere andere Heteroatome enthalten.

Das eingesetzte Polyazol, bevorzugt ein Polybenzimidazol, weist ein hohes Molekulargewicht auf. Gemessen als intrinsische Viskosität beträgt diese mindestens 3,0 dL/g, bevorzugt mindestens 3,5 dL/g, besonders bevorzugt mindestens 4,0 dL/g, insbesondere mindestens 4,5 dL/g. Die Obergrenze liegt bei 8,0 dL/g, bevorzugt bei 7,0 dL/g, besonders bevorzugt bei 6,0 dL/g, insbesondere bei 5,5 dl/g. Das Molekulargewicht liegt somit deutlich über der des handelsüblichen Polybenzimidazols (IV < 1,1 dl/g).

Die Bestimmung der Intrinsischen Viskosität erfolgt wie nachfolgend beschrieben: Hierzu wird das Polymer zunächst bei 160°C während 2h getrocknet. 100 mg des so getrockneten Polymers werden dann während 4h bei 80°C in 100 ml von konzentrierter Schwefelsäure (min. 96 Gew.%) gelöst. Die inhärente bzw. intrinsische Viskosität wird aus dieser Lösung gemäß ISO 3105 (DIN 51562, ASTM D2515) mit einem Ubbelhode Viskosimeter bei einer Temperatur von 25°C ermittelt.

Die Lösungsviskosität der erfindungsgemäßen Zusammensetzung, gemessen mit einem Rotationsviskosimeter bei einer Temperatur von 150°C und einer Scherrate von 1 Hz, liegt vorzugsweise im Bereich von 0,1 Pas bis 300 Pas, bevorzugt im Bereich von 0,5 Pas bis 100 Pas, besonders bevorzugt im Bereich von 1 Pas bis 50 Pas, insbesondere im Bereich von 5 Pas bis 25 Pas. Die Lösungsviskosität der erfindungsgemäßen Zusammensetzung, gemessen mit einem Rotationsviskosimeter bei einer Temperatur von 150°C und einer Scherrate von 100 Hz, liegt vorzugsweise im Bereich von 0,1 Pas bis 100 Pas, bevorzugt im Bereich von 0,5 Pas bis 50 Pas, besonders bevorzugt im Bereich von 1 Pas bis 25 Pas, insbesondere im Bereich von 3 Pas bis 10 Pas. Die Lösungsviskosität wird vorzugsweise in Anlehnung an DIN 53018 zwischen zwei 25 mm Platten mit einem konstanten Spalt von 1 mm gemessen.

Weitere Informationen zu den Viskositätsgrößen und den zugehörigen Bestimmungsverfahren können der gängigen Fachliteratur, z. B. Ullmann 1, 67-85; (4.) 5, 755-778, entnommen werden, deren Offenbarung hiermit durch Bezugnahme eingeschlossen wird.

Das Polyazol enthält vorzugsweise wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 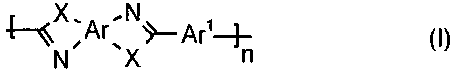 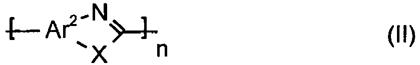 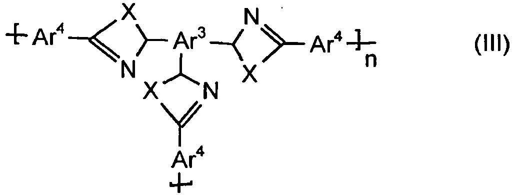 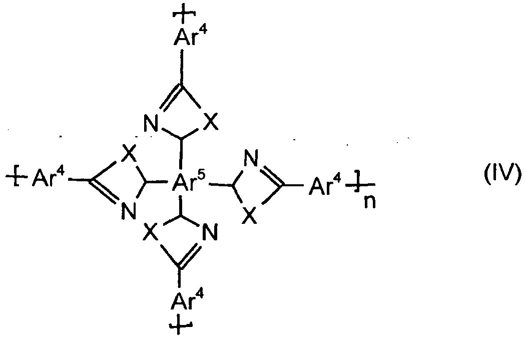 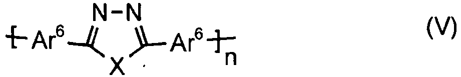 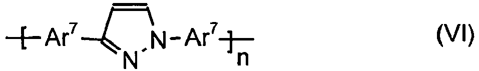 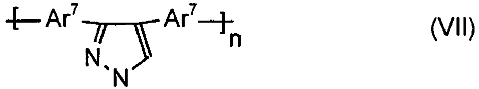 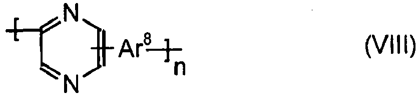 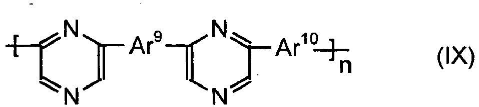 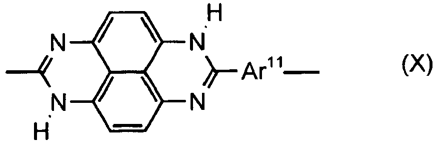 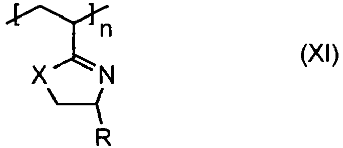 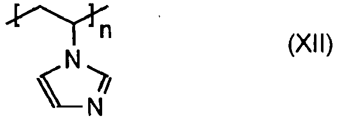 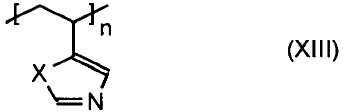 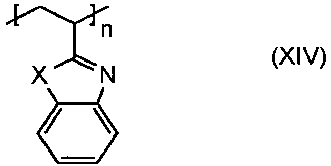 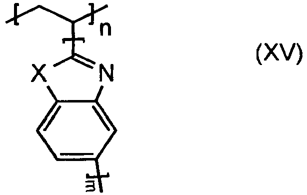 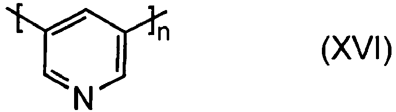 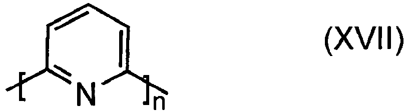 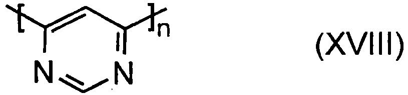 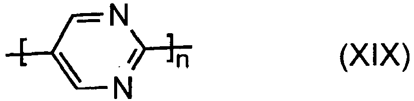 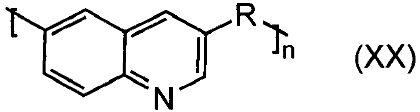 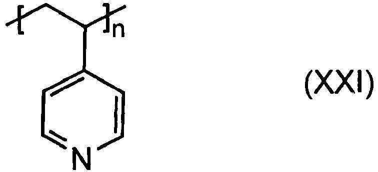 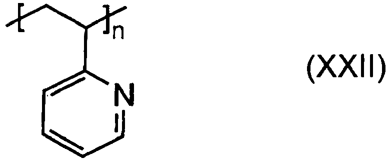 worin
- Ar: gleich oder verschieden sind und für eine vierbindige aromatische oder heteroaromatische Gruppe stehen, die ein- oder mehrkernig sein kann,
- Ar¹: gleich oder verschieden sind und für eine zweibindige aromatische oder heteroaromatische Gruppe stehen, die ein- oder mehrkernig sein kann,
- Ar²: gleich oder verschieden sind und für eine zwei oder dreibindige aromatische oder heteroaromatische Gruppe stehen, die ein- oder mehrkernig sein kann,
- Ar³: gleich oder verschieden sind und für eine dreibindige aromatische oder heteroaromatische Gruppe stehen, die ein- oder mehrkernig sein kann,
- Ar⁴: gleich oder verschieden sind und für eine dreibindige aromatische oder heteroaromatische Gruppe stehen, die ein- oder mehrkernig sein kann,
- Ar⁵: gleich oder verschieden sind und für eine vierbindige aromatische oder heteroaromatische Gruppe stehen, die ein- oder mehrkernig sein kann,
- Ar⁶: gleich oder verschieden sind und für eine zweibindige aromatische oder heteroaromatische Gruppe stehen, die ein- oder mehrkernig sein kann,
- Ar⁷: gleich oder verschieden sind und für eine zweibindige aromatische oder heteroaromatische Gruppe stehen, die ein- oder mehrkernig sein kann,
- Ar⁸: gleich oder verschieden sind und für eine dreibindige aromatische oder heteroaromatische Gruppe stehen, die ein- oder mehrkernig sein kann,
- Ar⁹: gleich oder verschieden sind und für eine zwei- oder drei- oder vierbindige aromatische oder heteroaromatische Gruppe stehen, die ein- oder mehrkernig sein kann,
- Ar¹⁰: gleich oder verschieden sind und für eine zwei- oder dreibindige aromatische oder heteroaromatische Gruppe stehen, die ein- oder mehrkernig sein kann,
- Ar¹¹: gleich oder verschieden sind und für eine zweibindige aromatische oder heteroaromatische Gruppe stehen, die ein- oder mehrkernig sein kann,
- X: gleich oder verschieden ist und für Sauerstoff, Schwefel oder eine Aminogruppe steht, die ein Wasserstoffatom, eine 1-20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: in allen Formeln außer Formel (XX) gleich oder verschieden für Wasserstoff, eine Alkylgruppe oder eine aromatische Gruppe und in Formel (XX) für eine Alkylengruppe oder eine aromatische Gruppe steht und
- n, m: jeweils eine ganze Zahl größer gleich 10, bevorzugt größer gleich 100 sind.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen, wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine) und Poly(tetrazapyrene).

In einer weiteren Ausführungsform der vorliegenden Erfindung ist das Polyazol ein Copolymer, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polyazol ein Homopolymer, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben:

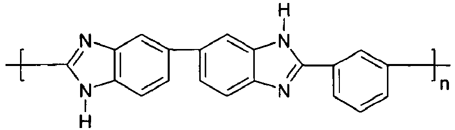

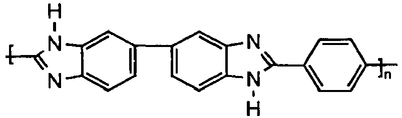

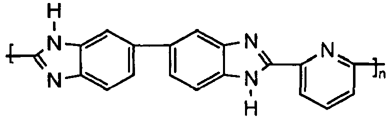

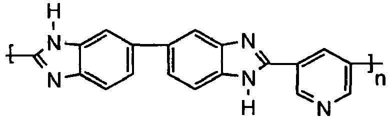

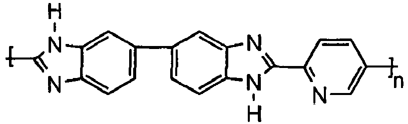

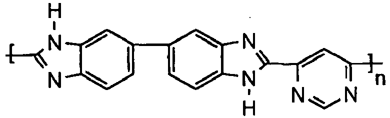

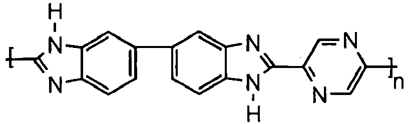

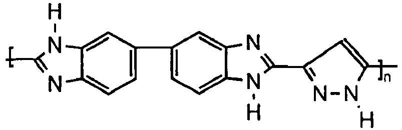

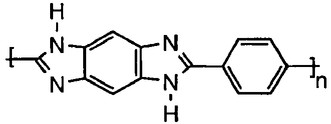

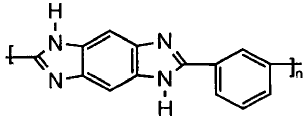

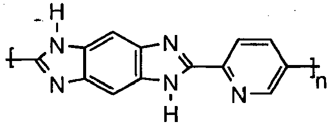

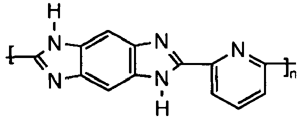

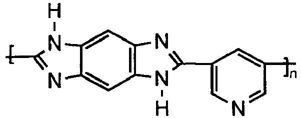

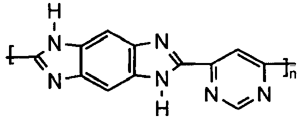

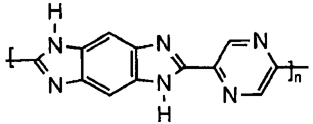

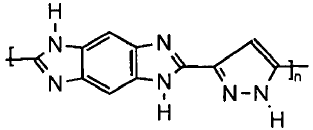

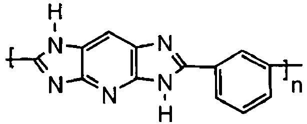

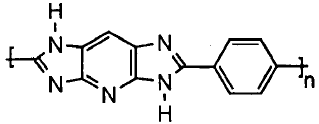

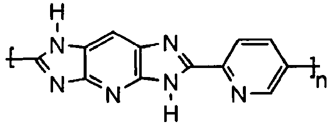

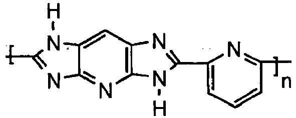

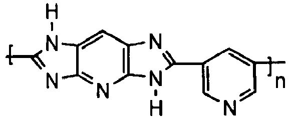

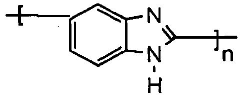

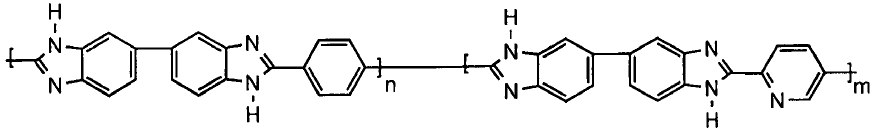

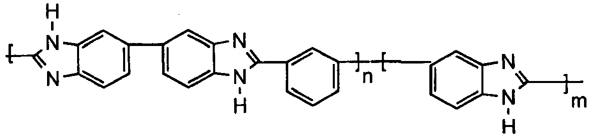

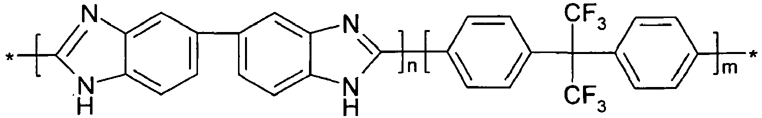

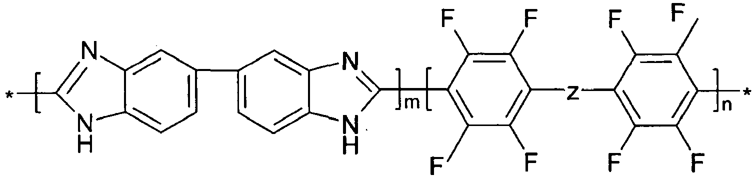

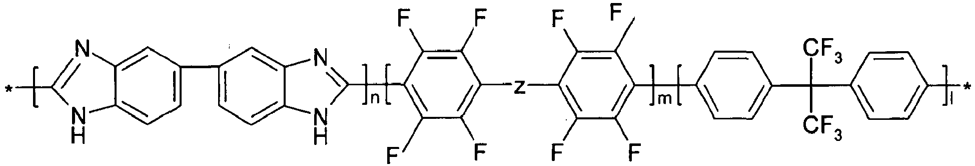

In der letzten Formel können die Azol-Einheiten und die beiden fluorierten Anteile in beliebiger Reihenfolge miteinander verknüpft sein. Die Herstellung kann als Polymer, statisches Copolymer oder Blockcopolymer erfolgen.

Weiterhin sind in den obigen Formeln n und m, jeweils unabhängig voneinander, eine ganze Zahl größer gleich 10, vorzugsweise größer gleich 100.

Im Rahmen einer besonders bevorzugten Variante der vorliegenden Erfindung weisen die Polyazole mindestens eine Sulfonsäure- und/oder Phosphonsäuregruppe auf. Derartige Polymere werden in der Druckschrift DE 102 46 459 A1 beschrieben, deren Offenbarung hiermit durch Bezugnahme mit aufgenommen wird.

Bevorzugte Polybenzimidazole sind unter dem Handelsnamen ®Celazole oder auch ®Hozole (Fa. Hostec, Österreich) kommerziell erhältlich.

Die Herstellung der Polyazole kann auf an sich bekannte Weise erfolgen, bevorzugt wird jedoch die Umsetzung von einer oder mehreren aromatischen und/oder heteroaromatischen Tetra-Amino-Verbindungen mit einer oder mehreren aromatischen und/oder heteroaromatischen Carbonsäuren oder deren Derivate, die mindestens zwei Säuregruppen pro Carbonsäure-Monomer umfassen. Des Weiteren können auch eine oder mehrere aromatische und/oder heteroaromatische Diaminocarbonsäuren zur Herstellung von Polyazolen eingesetzt werden.

Zu den einsetzbaren aromatischen und heteroaromatischen Tetra-Amino-Verbindungen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate. Hiervon sind 3,3',4,4'-Tetraaminobiphenyl, 2,3,5,6-Tetraaminopyridin und 1,2,4,5-Tetraaminobenzol besonders bevorzugt.

Bei den aromatischen und/oder heteroaromatischen Carbonsäuren handelt es sich bevorzugt um Dicarbonsäuren und Tricarbonsäuren und Tetracarbonsäuren oder deren Estern oder deren Anhydride oder deren Säurehalogenide, insbesondere deren Säurehalogenide und/oder Säurebromide. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Bei den aromatischen Tricarbonsäuren oder deren C1-C20-Alkyl-Ester oder C5-C12-Aryl-Ester oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure, 3,5,4'-Biphenyltricarbonsäure.

Bei den aromatischen Tetracarbonsäuren oder deren C1-C20-Alkyl-Ester oder C5-C12-Aryl-Ester oder deren Säureanhydride oder deren Säurechloride handelt es sich bevorzugt um 3,5,3',5'-Biphenyltetracarbonsäure, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure.

Bei den heteroaromatischen Carbonsäuren handelt es sich bevorzugt um heteroaromatische Dicarbonsäuren und Tricarbonsäuren und Tetracarbonsäuren oder deren Estern oder deren Anhydride. Als heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure, Benzimidazol-5,6-dicarbonsäure sowie deren C1-C20-Alkyl-Ester oder C5-C12-Aryl-Ester, oder deren Säureanhydride oder deren Säurechloride.

Der Gehalt an Tricarbonsäure oder Tetracarbonsäuren (bezogen auf eingesetzte Dicarbonsäure) beträgt vorzugsweise zwischen 0 und 30 Mol-%, vorzugsweise 0,1 und 20 Mol %, insbesondere 0,5 und 10 Mol-%.

Des Weiteren können auch aromatische und heteroaromatische Diaminocarbonsäuren eingesetzt werden. Zu diesen gehört unter anderem Diaminobenzoesäure, 4-Phenoxycarbonyl-3',4'-diaminodiphenylether und deren Mono- und Dihydrochloridderivate.

Bevorzugt werden Mischungen von mindestens 2 verschiedenen aromatischen Carbonsäuren eingesetzt. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise zwischen 1:50 bis 50:1.

Bei diesen Mischungen handelt es sich insbesondere um Mischungen von N-heteroaromatischen Dicarbonsäuren und aromatischen Dicarbonsäuren. Nicht limitierende Beispiele für Dicarbonsäuren sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure.

Soll ein möglichst hohes Molekulargewicht erzielt werden, so liegt das Molverhältnis von Carbonsäuregruppen zu Aminogruppen bei der Umsetzung von Tetra-Amino-Verbindungen mit einer oder mehreren aromatischen Carbonsäuren oder deren Estern, die mindestens zwei Säuregruppen pro Carbonsäure-Monomer enthalten, vorzugsweise in der Nähe von 1:2.

Bevorzugt werden mindestens 0,5 Gew.-%, insbesondere 1 bis 30 Gew.-% und besonders bevorzugt 2 bis 15 Gew.-% Monomere zur Herstellung von Polyazolen eingesetzt, jeweils bezogen auf das resultierende Gewicht der zu verwendenden Zusammensetzung.

Insofern auch Tricarbonsäuren oder Tetracarbonsäre eingesetzt werden, wird hierdurch eine Verzweigung/ Vernetzung des gebildeten Polymeren erzielt. Diese trägt zur Verbesserung der mechanischen Eigenschaft bei.

Zur Polymerisation werden das oder die Monomere vorzugsweise auf eine Temperatur von bis zu 400°C, insbesondere 350°C, vorzugsweise bis zu 280°C, insbesondere im Bereich von 100°C bis 250°C, ganz besonders bevorzugt im Bereich von 160 bis 250°C, insbesondere im Bereich von 200°C bis 240°C, erhitzt.

Gemäß einem weiteren Aspekt der vorliegenden Erfindung werden Verbindungen verwendet, die unter Einwirkung von Wärme zur Bildung von Polyazolen geeignet sind, wobei diese Verbindungen durch Umsetzung von einem oder mehreren aromatischen und/oder heteroaromatischen Tetra-Amino-Verbindungen mit einer oder mehreren aromatischen und/oder heteroaromatischen Carbonsäuren bzw. deren Derivate, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 400°C, insbesondere bis zu 350°C, bevorzugt bis zu 280°C erhältlich sind. Die zur Herstellung dieser Präpolymere einzusetzenden Verbindungen wurden zuvor dargelegt.

Neben dem Polyazol enthält die erfindungsgemäße Zusammensetzung ortho-Phosphorsäure (H₃PO₄) und/oder Polyphosphorsäure Hₙ₊₂PₙO₃ₙ₊₁ (n>1). Als Polyphosphorsäure kann handelsübliche Polyphosphorsäure eingesetzt werden, wie sie beispielsweise von Riedel-de Haen erhältlich ist.

Dabei sind die relativen Anteile des Polyazols, der ortho-Phosphorsäure und/oder der Polyphosphorsäure so zu wählen, dass
▪ der Gehalt an Polyazol, bezogen auf das Gesamtgewicht der Zusammensetzung, im Bereich von 0,5 Gew.-% bis 30,0 Gew.-%, bevorzugt im Bereich von 1,0 Gew.-% bis 20,0 Gew.-%, besonders bevorzugt im Bereich von 1,5 Gew.-% bis 10,0 Gew.-%, insbesondere im Bereich von 1,7 Gew.-% bis 5,0 Gew.-%, liegt,
▪ der Gehalt an H₃PO₄ und/oder Polyphosphorsäure, bezogen auf das Gesamtgewicht der Zusammensetzung, im Bereich von 30,0 Gew.-% bis Gew. 99,5, bevorzugt im Bereich von 40,0 Gew.-% bis 99,0 Gew.-%, besonders bevorzugt im Bereich von 60,0 Gew.-% bis 98,5 Gew.-%, insbesondere im Bereich von 85,0 Gew.-% bis 95,0 Gew.-%, liegt,
▪ die Konzentration der H₃PO₄ und/oder Polyphosphorsäure, berechnet als P₂O₅ (acidimetrisch) bezogen auf die Gesamtmenge an H₃PO₄ und/oder Polyphosphorsäure und/oder Wasser, im Bereich von 70,5 % bis 74,0 %, bevorzugt im Bereich von 71,0 % bis 75,0 %, besonders bevorzugt im Bereich von 71,5 % bis 74,0 %, ganz besonders bevorzugt im Bereich von 71,7 % bis 73,0 %, insbesondere im Bereich von 72,0 % bis 72,4 %, liegt.

Die erfindungsgemäße Zusammensetzung liegt als Dispersion und/oder Lösung vor und kann ggf. geringe Feststoffanteile und/oder Gelanteile umfassen. Besonders bevorzugt ist der Anteil abfiltrierbarer Bestandteile jedoch kleiner 30,0 Gew.-%, vorzugsweise kleiner 10,0 Gew.-%, bevorzugt kleiner 5,0 Gew.-%, besonders bevorzugt kleiner 3,0 Gew.-%, insbesondere kleiner 1,0 Gew.-%, jeweils bezogen auf das Gesamtgewicht der Zusammensetzung. Die Bestimmung der abfiltrierbaren Mengen erfolgt dabei günstigerweise bei 160 °C. Weiterhin werden vorzugsweise Siebe mit Sieböffnungen (Maschen) kleiner 1,0 mm, bevorzugt kleiner 500 µm, besonders bevorzugt kleiner 100 µm, eingesetzt.

Zur weiteren Verbesserung der anwendungstechnischen Eigenschaften können der Zusammensetzung zusätzlich noch Füllstoffe, insbesondere protonenleitende Füllstoffe, sowie zusätzliche Säuren zugesetzt werden.

Nicht limitierende Beispiele für Protonenleitende Füllstoffe sind

| | |
|---|---|
| Sulfate wie: | CsHSO₄, Fe(SO₄)₂, (NH₄)₃H(SO₄)₂, LiHSO₄, NaHSO₄, KHSO₄, RbSO₄, LiN₂H₅SO₄, NH₄HSO₄, |
| Phosphate wie | Zr₃(PO₄)₄, Zr(HPO₄)₂, HZr₂(PO₄)₃, UO₂PO₄.3H₂O, H₈UO₂PO₄, Ce(HPO₄)₂, Ti(HPO₄)₂, KH₂PO₄, NaH₂PO₄, LiH₂PO₄, NH₄H₂PO₄, CsH₂PO₄, CaHPO₄, MgHPO₄, HSbP₂O₈, HSb₃P₂O₁₄, H₅Sb₅P₂O₂₀, |
| Polysäure wie | H₃PW₁₂O₄₀.nH₂O (n=21-29), H₃SiW₁₂O₄₀.nH₂O (n=21-29), HₓWO₃, HSbWO₆, H₃PMo₁₂O₄₀, H₂Sb₄O₁₁, HTaWO₆, HNbO₃, HTiNbO₅, HTiTaO₅, HSbTeO₆, H₅Ti₄O₉, HSbO₃, H₂MoO₄ |
| Selenite und Arsenide wie | (NH₄)₃H(SeO₄)₂, UO₂AsO₄, (NH₄)₃H(SeO₄)₂, KH₂AsO₄, Cs₃H(SeO₄)₂, Rb₃H(SeO₄)₂, |
| Phosphide wie | ZrP, TiP, HfP |
| Oxide wie | Al₂O₃, Sb₂O₅, ThO₂, SnO₂, ZrO₂, MoO₃ |
| Silikate wie | Zeolithe, Zeolithe(NH₄+), Schichtsilikate, Gerüstsilikate, H-Natrolite, H-Mordenite, NH₄-Analcine, NH₄-Sodalite, NH₄-Gallate, H-Montmorillonite, andere Kondensationsprodukte der Orthokieselsäure Si(OH)₄ sowie deren Salze und Ester, Polysiloxane der allg. Formel H₃Si-(O-SiH₂-)ₙ-O-SiH₃, speziell auch andere Tonmineralien, wie Montmorrillonite, Bertonite, Kaolinite, Pyrophillite, Talkum, Chlorite, Muscovite, Glimmer, Smectite, Halosite, Vermiculite und Hydrotalcite. |
| Säuren wie | HClO₄, SbF₅ |
| Füllstoffe wie | Carbide, insbesondere SiC, Si₃N₄, Fasern, insbesondere Glasfasern, Glaspulvern und/oder Polymerfasern, Vliesse oder Gewebe, bevorzugt auf Basis von Polyazolen und/oder Polyaryletherketonen oder Polyarylethersulfonen, auch teilvernetzt. Die Füllstoffe können auch teilweise oder vollständig, bezogen auf den Aromatenanteil, durch geladene Gruppen modifiziert sein, wobei in diesen Zusammenhang Sulfonsäuregruppen, Phosphonsäuregruppen, Phosphatgruppen und/oder andere anionische oder kationische geladene Gruppen besonders geeignet sind. |

Diese Additive können in der Zusammensetzung in üblichen Mengen enthalten sein, wobei jedoch die positiven Eigenschaften, wie hohe Leitfähigkeit, hohe Lebensdauer und hohe mechanische Stabilität der Membran durch Zugabe von zu großen Mengen an Additiven nicht allzu stark beeinträchtigt werden sollten. Im Allgemeinen umfasst die resultierende Membran höchstens 80 Gew.-%, vorzugsweise höchstens 50 Gew.-% und besonders bevorzugt höchstens 20 Gew.-% Additive.

Als weiteres kann die Zusammensetzung auch perfluorierte Sulfonsäure-Additive (vorzugsweise 0,1-20 Gew.-%, bevorzugt 0,2-15 Gew.-%, ganz bevorzugt 0,2-10 Gew.-%) enthalten. Diese Additive führen zur Leistungsverbesserung, in der Nähe der Kathode zur Erhöhung der Sauerstofflöslichkeit und Sauerstoffdiffusion und zur Verringerung der Adsorbtion von Phosphorsäure und Phosphat zu Platin. (Electrolyte additives for phosphoric acid fuel cells. Gang, Xiao; Hjuler, H. A.; Olsen, C.; Berg, R. W.; Bjerrum, N. J. Chem. Dep. A, Tech. Univ. Denmark, Lyngby, Den. J. Electrochem. Soc. (1993), 140(4), 896-902 und Perfluorosulfonimide as an additive in phosphoric acid fuel cell. Razaq, M.; Razaq, A.; Yeager, E.; DesMarteau, Darryl D.; Singh, S. Case Cent. Electrochem. Sci., Case West. Reserve Univ., Cleveland, OH, USA. J. Electrochem. Soc. (1989), 136(2), 385-90.)

Nicht limitierende Beispiele für persulfonierte Additive sind: Trifluomethansulfonsäure, Kaliumtrifluormethansulfonat, Natriumtrifluormethansulfonat, Lithiumtrifluormethansulfonat, Ammoniumtrifluormethansulfonat, Kaliumperfluorohexansulfonat, Natriumperfluorohexansulfonat, Lithiumperfluorohexansulfonat, Ammoniumperfluorohexansulfonat, Perfluorohexansulfonsäure, Kaliumnonafluorbutansulfonat, Natriumnonafluorbutansulfonat, Lithiumnonafluorbutansulfonat, Ammoniumnonafluorbutansulfonat, Cäsiumnonafluorbutansulfonat, Triethylammoniumperfluorohexasulfonat, Perflurosulfoimide und Nafion.

Die Herstellung der erfindungsgemäßen Zusammensetzung kann durch einfaches Mischen der Komponenten erfolgen. Alternativ ist auch die Aufkonzentration von H₃PO₄ und/oder Polyphosphorsäure-haltigen Zusammensetzungen mit niedrigerer P₂O₅-Konzentration oder die Verdünnung von solchen Zusammensetzungen mit höherer P₂O₅-Konzentration, d. h. die Entfernung oder die Zuführung von Wasser denkbar.

Hierbei ist jedoch zu beachten, dass in manchen Fällen, insbesondere bei tiefen Temperaturen und/oder hohen Feststoffgehalten, das Auflösen oder Dispergieren des Polyazols in der ortho-Phosphorsäure und/oder Polyphosphorsäure, kinetisch gehemmt ist. Die Zusammensetzung liegt dann zunächst inhomogen vor. Bei höheren Temperaturen größer 100°C kommt es zusätzlich zur Verdampfung von Wasser aus der Zusammensetzung mit der Folge, dass sich die Konzentration der H₃PO₄ und/oder Polyphosphorsäure mit der Zeit verändert.

Zweckmäßigerweise erfolgt daher die Herstellung der erfindungsgemäßen Zusammensetzung nach einem Verfahren, bei welchem man
a) mindestens ein Polyazol in ortho-Phosphorsäure und/oder Polyphosphorsäure auflöst und/oder dispergiert, wobei man die Konzentration der H₃PO₄ und/oder Polyphosphorsäure, berechnet als P₂O₅ bezogen auf die Gesamtmenge an H₃PO₄ und/oder Polyphosphorsäure und/oder Wasser, kleiner 72,0 %, bevorzugt kleiner 71,7 %, besonders bevorzugt kleiner %, ganz besonders bevorzugt kleiner 71,0 %, insbesondere kleiner 70,5 %, wählt, und
b) Wasser aus der Lösung oder Dispersion aus Schritt a) entfernt und die Konzentration der H₃PO₄ und/oder Polyphosphorsäure, berechnet als P₂O₅ bezogen auf die Gesamtmenge an H₃PO₄ und/oder Polyphosphorsäure und/oder Wasser, vorzugsweise um mindestens 0,1 %, bevorzugt um mindestens 0,5 %, besonders bevorzugt um mindestens 1,0 %, insbesondere um mindestens 1,5 %, erhöht.

Die Lösung oder Dispersion aus Schritt a) ist in der Regel auf an sich bekannte Weise, beispielsweise durch Mischen der Komponenten, erhältlich. Weitere Herstellungsmethoden werden in der WO 02/08829 beschrieben.

Besonders bevorzugt wird die Lösung oder Dispersion aus Schritt a) durch Hydrolyse einer Lösung oder Dispersion erhalten, die mindestens ein Polyazol und Polyphosphorsäure umfasst. Die Herstellung einer solchen Lösung oder Dispersion kann durch Polymerisation der zuvor genannten Monomere in Polyphosphorsäure erfolgen.

Die Lösung oder Dispersion aus Schritt a) enthält, bezogen auf ihr Gesamtgewicht, vorzugsweise mindestens 1,8 Gew.-%, besonders bevorzugt mindestens 2,0 Gew.-%, insbesondere im Bereich von 2,2 bis 2,5 Gew.-%, mindestens eines Polyazols mit einer intrinsischen Viskosität, gemessen in mindestens 96 Gew.-%-iger Schwefelsäure, im Bereich von 3,0 bis 8 g/dL. Die Gesamtmenge an ortho-Phosphorsäure, Wasser und ggf. Polyphosphorsäure ist vorzugsweise bis zu 98,2 Gew.-% und liegt bevorzugt im Bereich von 90,0 bis zu 98,0 Gew.-%, insbesondere im Bereich von 95,0 bis 97,8 Gew.-%.

Die Entfernung des Wassers in Schritt b) erfolgt vorzugsweise durch Verdampfen, insbesondere durch Erwärmen der Zusammensetzung aus Schritt a) auf über 100°C und/oder durch Anlegen von Unterdruck. Besonders bevorzugt wird eine Vorgehensweise, bei welcher man die Zusammensetzung aus Schritt a) auf eine Temperatur im Bereich von größer 120°C bis 240°C, insbesondere im Bereich von 120°C bis 160°C, zweckmäßigerweise für eine Zeit im Bereich von mindestens 1 h bis höchstens 48 h, insbesondere im Bereich von mindestens 2 h bis höchstens 24 h, erwärmt.

Gemäß einer weiteren bevorzugten Variante der vorliegenden Erfindung erfolgt die Herstellung der erfindungsgemäßen Zusammensetzung derart, dass man
i) eine Lösung oder Dispersion eines Polyazols mit einer intrinsischen Viskosität, gemessen in mindestens 96 Gew.-%-iger Schwefelsäure, im Bereich von 3,0 bis 8,0 g/dL, in Polyphosphorsäure bei einer Temperatur größer 160°C, bevorzugt größer 180°C, insbesondere im Bereich von 180°C bis 240°C, vorlegt, wobei die Konzentration an H₃PO₄ und/oder Polyphosphorsäure, berechnet als P₂O₅ (acidimetrisch) bezogen auf die Gesamtmenge an H₃PO₄ und/oder Polyphosphorsäure und/oder Wasser, größer 72,4 %, bevorzugt größer 73,0 %, besonders bevorzugt größer 74,0 %, ganz besonders bevorzugt größer 75,0 -%, insbesondere größer 75,45 %, ist,
ii) Wasser, ortho-Phosphorsäure und/oder Polyphosphorsäure zu der Lösung oder Dispersion zugibt, bis das Gemisch eine Gesamtmenge an H₃PO₄ und/oder Polyphosphorsäure, berechnet als P₂O₅ (acidimetrisch) bezogen auf die Gesamtmenge an H₃PO₄ und/oder Polyphosphorsäure und/oder Wasser, im Bereich von 70,5 % bis 74,0 %, bevorzugt im Bereich von 71,0 % bis 74,0 -%, besonders bevorzugt im Bereich von 71,5 % bis 74,0 %, ganz besonders bevorzugt im Bereich von 71,7 % bis 73,0 %, insbesondere im Bereich von 72,0 % bis 72,4 %, aufweist,
iii) das Gemisch homogenisiert, wobei man die Gesamtmenge an H₃PO₄ und/oder Polyphosphorsäure in dem in Schritt ii) genannten Bereich hält.

Die Lösung oder Dispersion aus Schritt i) ist in der Regel auf an sich bekannte Weise, beispielsweise durch Mischen der Komponenten, erhältlich. Weitere Herstellungsmethoden werden in der WO 02/08829 beschrieben.

Besonders bevorzugt wird die Lösung oder Dispersion aus Schritt a) durch Polymerisation der zuvor genannten Monomere in Polyphosphorsäure erhalten.

Die Lösung oder Dispersion aus Schritt i) enthält, bezogen auf ihr Gesamtgewicht,
- vorzugsweise mindestens 1,8 Gew.-%, besonders bevorzugt mindestens 2,0 Gew.-%, insbesondere im Bereich von 2,2 bis 2,5 Gew.-%, mindestens eines Polyazols mit einer intrinsischen Viskosität, gemessen in mindestens 96 Gew.-%-iger Schwefelsäure, im Bereich von 3,0 bis 8 g/dL, und
- vorzugsweise bis zu 98,2 Gew.-%, bevorzugt im Bereich von 90,0 bis zu 98,0 Gew.-%, insbesondere im Bereich von 95,0 bis 97,8 Gew.-%, Polyphosphorsäure und ggf. ortho-Phosphorsäure und/oder Wasser.

Als Polyphosphorsäure kann handelsübliche Polyphosphorsäure eingesetzt werden, wie sie beispielsweise von Riedel-de Haen erhältlich ist. Die Polyphosphorsäure Hₙ₊₂PₙO₃ₙ₊₁ (n>1) besitzt vorzugsweise einen Gehalt berechnet als P₂O₅ (acidimetrisch) von mindestens 83%.

Die herkömmliche Hydrolyse solcher Zusammensetzungen führt zu Zusammensetzungen mit verschlechtertem Fliessverhalten, die unter Standardbedingungen nicht mehr verarbeitbar sind. Daher werden erfindungsgemäß die Schritte ii) und iii) durchgeführt.

Die Zugabe in Schritt ii) kann dabei sowohl portionsweise als auch kontinuierlich erfolgen.

Nach der Zugabe enthält das Gemisch, bezogen auf ihr Gesamtgewicht,
- vorzugsweise mindestens 1,6 Gew.-%, besonders bevorzugt mindestens 1,8 Gew.-%, insbesondere im Bereich von 2,0 bis 2,3 Gew.-%, mindestens eines Polyazols mit einer intrinsischen Viskosität, gemessen in mindestens 96 Gew.-%-iger Schwefelsäure, im Bereich von 3,0 bis 8 g/dL, und
- vorzugsweise bis zu 98,4 Gew.-%, bevorzugt im Bereich von 90,0 bis zu 98,2 Gew.-%, insbesondere im Bereich von 95,0 bis 98,0 Gew.-%, Polyphosphorsäure und ggf. ortho-Phosphorsäure und/oder Wasser.

Infolge der Zugabe in Schritt ii) bildet sich zunächst ein inhomogenes Gemisch. Als inhomogen wird hier eine Änderung der optischen oder physikalischen Eigenschaften bezeichnet die, die Gleichheit einer Eigenschaft über die gesamte Ausdehnung des Systems, bzw. die Gleichartigkeit der Erscheinungen der Lösung ändert. Typischerweise äußert sich die Änderung der Homogenität der Lösung durch Grenzflächenbildung (Abscheidung von Flüssigkeit von der viskosen Masse), Änderung der Farbe (typischerweise von grün ins gelbliche), oder aber die Abscheidung von deutlich sichtbaren Partikeln oder Feststoffteilchen aus der glatten Lösung. Als homogen wird die Lösung betrachtet, wenn diese der Lösung oder Dispersion des Polyazols in Polyphosphorsäure optisch gleicht; Unterscheidungen gibt es ggf. nur in der Viskosität.

Die Homogenisierung in Schritt iii) erfolgt vorzugsweise in einem geschlossenen System, beispielsweise in einem Autoklaven. Auch ist es besonders günstig, ggf. verdampfendes Wasser zu kondensieren und dem Gemisch wieder zuzuführen, bevorzugt indem man das verdampfende Wasser in mindestens einem Rückflusskühler kondensiert, der vorzugsweise direkt mit dem Reaktionsgefäß verbunden ist.

Überraschenderweise homogenisiert sich die Lösung nach einiger Zeit, bevorzugt in weniger als 4h, insbesondere nach spätestens 2h. Die Lösungsviskosität des Gemischs sinkt ab und es bildet sich eine erfindungsgemäße Zusammensetzung.

Mögliche Anwendungsgebiete der erfindungsgemäßen Zusammensetzung sind dem Fachmann unmittelbar offensichtlich. Besonders bevorzugt wird sie zur Herstellung eines beschichteten Substrats eingesetzt, indem man die erfindungsgemäße Zusammensetzung auf ein Substrat, zweckmäßigerweise eine flächige Elektrode, aufbringt.

Das Aufbringen auf dem Substrat kann auf an sich bekannte Weise erfolgen. Besonders bewährt haben sich Sprühen, Rakeln und Gießen, insbesondere Rakeln.

Im Rahmen einer besonders bevorzugten Variante der vorliegenden Erfindung geht man dermaßen vor, dass man
I) das Substrat auf einem Träger vorlegt,
II) eine Matrix mit mindestens einer Aussparung über dem Substrat derart positioniert, dass die zu beschichtende Fläche des Substrats von der Matrix nicht bedeckt wird,
III) das Substrat mit der erfindungsgemäßen Zusammensetzung vorzugsweise durch Rakeln beschichtet,
IV) das beschichtete Substrat von der Matrix und dem Träger ablöst.

Als Matrix für den Schritt II) dient vorzugsweise ein flächiges Gebilde, insbesondere eine Polymerfolie, welches mit mindestens einer Aussparung versehen ist. Die Form, Größe und Tiefe der Aussparung werden vorzugsweise entsprechend der gewünschten Form, Größe und Dicke der Beschichtung gewählt.

Das Aufbringen der Zusammensetzung kann dann äußerst effektiv und automatisiert durch Aufbringen, insbesondere durch Rakeln, der erfindungsgemäßen Zusammensetzung erfolgen, vorzugsweise indem man die ganze Aussparung mit der Zusammensetzung füllt.

Ggf. unerwünschte Mengen der Lösung außerhalb der Aussparung werden durch das Entfernen der Matrix einfach mit entfernt.

Erfindungsgemäß erfolgt die Beschichtung vorzugsweise bei einer Temperatur kleiner 160°C, bevorzugt kleiner 120°C, insbesondere im Bereich von 20°C bis 100°C.

Weiterhin kann das beschichtete Substrat vorzugsweise einer Nachbehandlung unterzogen werden. Eine derartige Nachbehandlung ist jedoch für Zusammensetzungen mit einer Gesamtmenge an H₃PO₄ und/oder Polyphosphorsäure, berechnet als P₂O₅ (acidimetrisch) bezogen auf die Gesamtmenge an H₃PO₄ und/oder Polyphosphorsäure und/oder Wasser, kleiner 72,43 % nicht mehr unbedingt erforderlich. Diese Zusammensetzungen können vielmehr direkt, ohne Nachbehandlung weiterverwendet werden,. Dies ist ein weiterer Vorteil der erfindungsgemäßen Zusammensetzungen.

Die Nachbehandlung kann mit verdünnter H₃PO₄, insbesondere mit einer Konzentration von 30 - 85 % durchgeführt werden. Ebenfalls möglich ist eine Nachbehandlung mit Wasser oder Feuchtigkeit. Die Behandlung der Beschichtung erfolgt vorzugsweise bei Temperaturen im Bereich von -100°C und 150°C, vorzugsweise bei Temperaturen zwischen 10°C und 120°C, insbesondere zwischen Raumtemperatur (20°C) und 110°C, besonders bevorzugt zwischen 30°C und 100°C. Weiterhin geschieht die Behandlung bevorzugt unter Normaldruck, sie kann aber auch unter Einwirkung von Druck erfolgen. Im Rahmen einer besonders bevorzugten Variante der vorliegenden Erfindung wird die Beschichtung durch ein Bad, welches Wasser oder wässrige Flüssigkeiten umfasst, geführt.

Die Feuchtigkeitsbehandlung der Beschichtung bedingt eine Verfestigung der Zusammensetzung und eine Abnahme der Schichtdicke und vorzugsweise die Ausbildung einer Membran in Form eines selbsttragenden Films. Die verfestigte Beschichtung hat im Allgemeinen eine Dicke zwischen 15 und 3000 µm, vorzugsweise 20 und 2000 µm, insbesondere zwischen 20 und 1500 µm, wobei die Membran selbsttragend ist.

Die obere Temperaturgrenze für die Feuchtigkeitsbehandlung beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die Feuchtigkeitsbehandlung kann auch in Klimakammern erfolgen, bei der die Feuchtigkeitseinwirkung gezielt gesteuert werden kann. Hierbei kann die Feuchtigkeit durch die Temperatur bzw. Sättigung der kontaktierenden Umgebung, beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Membran abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die Feuchtigkeitsbehandlung bei Raumtemperatur (20°C) mit Umgebungsluft einer relativen Luftfeuchtigkeit von 40-80% durchgeführt, beträgt die Behandlungsdauer vorzugsweise zwischen 1 und 200 Stunden.

Die erhaltene Beschichtung kann selbsttragend ausgebildet werden, d. h. sie kann vom Träger ohne Beschädigung abgelöst und anschließend ggf. direkt weiterverarbeitet werden.

Über den Grad der Feuchtigkeitsbehandlung, d.h. die Dauer, Temperatur und Umgebungsfeuchtigkeit, ist die Konzentration an Phosphorsäure und damit die Leitfähigkeit der erfindungsgemäßen Polymermembran einstellbar. Erfindungsgemäß wird die Konzentration der Phosphorsäure als Mol Säure pro Mol Wiederholungseinheit des Polymers angegeben. Im Rahmen der vorliegenden Erfindung beträgt die Konzentration (Mol Phosphorsäure bezogen auf eine Wiederholeinheit der Formel (III), d.h. Polybenzimidazol) vorzugsweise zwischen 10 und 90, bevorzugt zwischen 12 und 85, insbesondere zwischen 15 und 80, Mol Phosphorsäure.

In einer besonders bevorzugten Ausführungsform der vorliegenden Erfindung wird die Beschichtung vernetzt. Zu diesem Zweck werden vorteilhafterweise zur Vernetzung befähigte Monomere eingesetzt, welche vorzugsweise auf die zu vernetzende Beschichtung aufgebracht werden.

Bei den zur Vernetzung befähigten Monomeren handelt es sich insbesondere um Verbindungen, die mindestens 2 Kohlenstoff-Kohlenstoff Doppelbindungen aufweisen. Bevorzugt werden Diene, Triene, Tetraene, Dimethylacrylate, Trimethylacrylate, Tetramethylacrylate, Diacrylate, Triacrylate, Tetraacrylate.

Besonders bevorzugt sind Diene, Triene, Tetraene der Formel 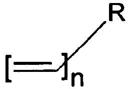 Dimethylacrylate, Trimethylycrylate, Tetramethylacrylate der Formel 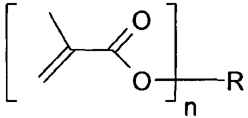 Diacrylate, Triacrylate, Tetraacrylate der Formel 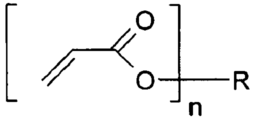 worin
- R: eine C1-C15-Alkylgruppe, C5-C20-Aryl oder Heteroarylgruppe, NR', -SO₂, PR', Si(R')₂ bedeutet, wobei die vorstehenden Reste ihrerseits substituiert sein können,
- R': unabhängig voneinander Wasserstoff, eine C1-C15-Alkylgruppe, C1-C15-Alkoxygruppe, C5-C20-Aryl oder Heteroarylgruppe bedeutet und
- n: mindestens 2 ist.

Bei den Substituenten des vorstehenden Restes R handelt es sich vorzugsweise um Halogen, Hydroxyl, Carboxy, Carboxyl, Carboxylester, Nitrile, Amine, Silyl, Siloxan Reste.

Besonders bevorzugte Vernetzer sind Allylmethacrylat, Ethylenglykoldimethacrylat, Diethylenglykoldimethacrylat, Triethylenglykoldimethacrylat, Tetra- und Polyethylenglykoldimethacrylat, 1,3-Butandioldimethacrylat, Glycerindimethacrylat, Diurethandimethacrylat, Trimethylpropantrimethacrylat, Epoxyacrylate, beispielsweise Ebacryl, N',N-Methylenbisacrylamid, Carbinol, Butadien, Isopren, Chloropren, Divinylbenzol und/oder Bisphenol-A-dimethylacrylat. Diese Verbindungen sind beispielsweise von Sartomer Company Exton, Pennsylvania unter den Bezeichnungen CN-120, CN104 und CN-980 kommerziell erhältlich.

Der Einsatz von Vernetzern ist optional, wobei diese Verbindungen üblich im Bereich zwischen 0,05 bis 30 Gew.-%, vorzugsweise 0,1 bis 20 Gew.-%, besonders bevorzugt 1 und 10 Gew.-%, bezogen auf das Gewicht der Beschichtung, eingesetzt werden können.

Die vernetzenden Monomere können auch durch Sprühen etc. aufgebracht werden.

Die vernetzenden Monomere werden vorzugsweise radikalisch polymerisiert. Die Radikalbildung kann thermisch, photochemisch, chemisch und/oder elektrochemisch erfolgen.

Beispielsweise kann eine Starterlösung auf die zu vernetzende Beschichtung aufgebracht werden. Dies kann mittels an sich bekannter Maßnahmen (z.B. Sprühen, Tauchen etc.) die aus dem Stand der Technik bekannt sind, erfolgen.

Geeignete Radikalbildner sind unter anderem Azoverbindungen, Peroxyverbindungen, Persulfatverbindungen oder Azoamidine. Nicht limitierende Beispiele sind Dibenzoylperoxid, Dicumolperoxid, Cumolhydroperoxid, Diisopropylperoxidicarbonat, Bis(4-t-butylcyclohexyl)peroxidicarbonat, Dikaliumpersulfat, Ammoniumperoxidisulfat, 2,2'-Azobis(2-methylpropionitril) (AIBN), 2,2'-Azobis-(isobuttersäureamidin)hydrochlorid, Benzpinakol, Dibenzylderivate, Methylethylenketonperoxid, 1,1-Azobiscyclohexancarbonitril, Methylethylketonperoxid, Acetylacetonperoxid, Dilaurylperoxid, Didecanoylperoxid, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoylperoxy)-2,5-dimethylhexan, tert.-Butylperoxy-2-ethylhexanoat, tert.-Butylperoxy-3,5,5-trimethylhexanoat, tert.-Butylperoxyisobutyrat, tert.-Butylperoxyacetat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, sowie die von der Firma DuPont unter dem Namen ®Vazo, beispielsweise ®Vazo V50 und ®Vazo WS erhältlichen Radikalbildner.

Des Weiteren können auch Radikalbildner eingesetzt werden, die bei Bestrahlung Radikale bilden. Zu den bevorzugten Verbindungen gehören unter anderem α,α-Diethoxyacetophenon (DEAP, Upjon Corp), n-Butylbenzoinether (®Trigonal-14, AKZO) und 2,2-Dimethoxy-2-phenylacetophenon (®Igacure 651) und 1-Benzoylcyclohexanol (®Igacure 184), Bis(2,4,6-trimethylbenzoyl)-phenylphosphinoxid (®Irgacure 819) und 1-[4-(2-Hydroxyethoxy)phenyl]-2-hydroxy-2-phenylpropan-1-on (®Irgacure 2959), die jeweils von der Fa. Ciba Geigy Corp. kommerziell erhältlich sind.

Üblicherweise werden zwischen 0,0001 und 5 Gew.-%, insbesondere 0,01 bis 3 Gew.-% (bezogen auf das Gewicht der radikalisch polymerisierbaren Monomere) an Radikalbildner zugesetzt. Die Menge an Radikalbildner kann je nach gewünschten Polymerisationsgrad variiert werden.

Die Polymerisation kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen.

Die Polymerisation kann auch durch Einwirken von UV-Licht mit einer Wellenlänge von weniger als 400 nm erfolgen. Diese Polymerisationsmethode ist an sich bekannt und beispielsweise in Hans Joerg Elias, Makromolekulare Chemie, 5.Auflage, Band 1, s.492-511; D. R. Arnold, N. C. Baird, J. R. Bolton, J. C. D. Brand, P. W. M Jacobs, P.de Mayo, W. R. Ware, Photochemistry-An Introduction, Academic Press , New York und M.K.Mishra, Radical Photopolymerization of Vinyl Monomers, J. Macromol. Sci.-Revs. Macromol. Chem. Phys. C22(1982-1983) 409 beschrieben.

Die Polymerisation kann auch durch Einwirken von ß-,γ- und/oder Elektronen Strahlen erzielt werden. Gemäß einer besonderen Ausführungsform der vorliegenden Erfindung wird eine Beschichtung mit einer Strahlungsdosis im Bereich von 1 bis 300 kGy, bevorzugt von 3 bis 200 kGy und ganz besonders bevorzugt von 20 bis 100 kGy bestrahlt.

Die Polymerisation der vernetzenden Monomere erfolgt vorzugsweise bei Temperaturen oberhalb Raumtemperatur (20°C) und kleiner 200°C, insbesondere bei Temperaturen zwischen 40°C und 150°C, besonders bevorzugt zwischen 50°C und 120°C. Die Polymerisation erfolgt vorzugsweise unter Normaldruck, kann aber auch unter Einwirkung von Druck erfolgen. Die Polymerisation führt zu einer Verfestigung der Beschichtung, wobei diese Verfestigung durch Mikrohärtemessung verfolgt werden kann. Vorzugsweise beträgt die durch die Polymerisation bedingte Zunahme der Härte mindestens 20%, bezogen auf die Härte der Beschichtung vor Vernetzung.

Je nach gewünschten Polymerisationsgrad ist das flächige Gebilde, welches nach der Polymerisation erhalten wird, eine selbsttragende Membran. Bevorzugt beträgt der Polymerisationsgrad mindestens 2, insbesondere mindestens 5, besonders bevorzugt mindestens 30 Wiederholeinheiten, insbesondere mindestens 50 Wiederholeinheiten, ganz besonders bevorzugt mindestens 100 Wiederholeinheiten. Dieser Polymerisationsgrad bestimmt sich über das Zahlenmittel des Molekulargewichts Mₙ, das durch GPC-Methoden ermittelt werden kann.

Im Anschluss an die Feuchtigkeitsbehandlung kann die Beschichtung durch Einwirken von Hitze in Gegenwart von Sauerstoff noch vernetzt werden. Diese Härtung der Beschichtung verbessert die Eigenschaften der Beschichtung zusätzlich. Hierzu kann die Beschichtung auf eine Temperatur von mindestens 150°C, vorzugsweise mindestens 200°C und besonders bevorzugt mindestens 250°C erwärmt werden. Die Sauerstoffkonzentration liegt bei diesem Verfahrensschritt üblich im Bereich von 5 bis 50 Vol.-%, vorzugsweise 10 bis 40 Vol.-%, ohne dass hierdurch eine Beschränkung erfolgen soll. Auch diese Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit ß-Strahlen. Die Strahlungsdosis beträgt hierbei zwischen 5 und 200 kGy.

Je nach gewünschtem Vernetzungsgrad kann die Dauer der Vernetzungsreaktion in einem weiten Bereich liegen. Im Allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Die erfindungsgemäße Vorgehensweise erlaubt eine vergleichsweise einfache und kostengünstige Herstellung von Säure-dotierten, Polyazol-enthaltenden Membranen, welches leicht großtechnisch umgesetzt werden kann. Dabei können insbesondere die folgenden Vorteile erreicht werden:
=> die Herstellung der Membranen kann mit einer deutlich besseren Raum-ZeitAusbeute erfolgen,
=> es werden Membranen mit vergleichsweise hoher Qualität und Reproduzierbarkeit erhalten, Qualitätsschwankungen zwischen unterschiedlichen Chargen werden so gut wie gar nicht beobachtet,
=> die Verarbeitung von Polyazolen mit vergleichsweise hohen Molekulargewichten ist nun möglich und
⇒ die Ausbildung von Blasen in der Membran wird nahezu vollständig verhindert.

Anwendungsgebiete der durch das erfindungsgemäße Verfahren erhältlichen Membranen umfassen insbesondere ihre Verwendung als Polymer-Elektrolyt-Membran in Brennstoffzellen. Für weitere Details wird auf die Druckschriften DE 102 13 540 A1, DE 102 46 559 A1 und DE 102 46 461 A1 verwiesen, deren Offenbarung hierin durch Bezugnahme aufgenommen wird.

Besonders bevorzugt wird im Rahmen der vorliegenden Erfindung die Verwendung des erfindungsgemäß beschichteten Substrats zur Herstellung von Membran-Elektroden-Einheiten, insbesondere für Brennstoffzellen. Günstigerweise werden diese erhalten, indem man das beschichtete Substrat mit einem weiteren Substrat, bevorzugt einer weiteren flächigen Elektrode, verpresst.

Ein weiterer Gegenstand der vorliegenden Erfindung ist ein Verfahren zur Herstellung einer Polymerfaser, umfassend die Schritte
A) Extrusion der erfindungsgemäßen Zusammensetzung unter Ausbildung von Fasern,
B) Einbringen der in Schritt A) gebildeten Fasern in ein Flüssigkeitsbad,
C) Isolieren und Trocknen der erhaltenen Fasern.

Die Extrusion in Schritt A) kann mittel sämtlicher bekannter Faserbildungsmethoden erfolgen. Die gebildeten Fasern können Endlos-Filamente sein oder - falls die Faserbildung analog der "Melt blow - Methode" erfolgt - Stapelfaser-Charakter aufweisen. Die Titer der gebildeten Fasern unterliegen keiner Einschränkung, so dass auch Monofile, d.h. Draht-ähnliche Fasern herstellbar sind. Neben diesen sind auch Hohlfasers herstellbar. Der gewünschte Titer ergibt sich aus der beabsichtigten Verwendung der Faser. Die gesamte Handhabung der gebildeten Faser kann mittels bekannter Faser-Technologien erfolgen.

In einer Variante der Erfindung wird die in Schritt A) extrudierte Zusammensetzung zuvor mit einem Gas gesättigt wird. Hierzu sind alle unter den gewählten Bedingungen inerten Gase geeignet. Die Sättigung erfolgt vorzugsweise im überkritischen Zustand, so dass das Gas bei der nachfolgenden Expansion Poren bildet. Diese Technologie ist unter der Bezeichnung MuCell^{®} bekannt. Durch Anwendung der MuCell-Technologie auf das erfindungsgemäße Verfahren ist es erstmalig möglich, Mikro-Schäume von Polyazol-Polymeren, insbesondere auf Basis der Polymeren Polyimidazole, Polybenzthiazole, Polybenzoxazole, Polyoxadiazole, Polyquinoxalines, Polythiadiazole Poly(pyridine), Poly(pyrimidine) und Poly(tetrazapyrene) zu erhalten.

Nach der Extrusion gemäß Schritt A) werden die gebildeten Fasern in ein Fällungsbad eingebracht. Dieses Einbringen erfolgt im Temperaturbereich zwischen Raumtemperatur (20°C) und der Siedetemperatur der Fällungs-Flüssigkeit (bei Normaldruck).

Als Fällungs-Flüssigkeit im Sinne der Erfindung und im Sinne von Schritt B) werden bei Raumtemperatur [d.h. 20°C] flüssig vorliegende Lösungsmittel ausgewählt aus der Gruppe der Alkohole, Ketone, Alkane (aliphatische und cycloaliphatische), Ether (aliphatische und cycloaliphatische), Ester, Carbonsäuren, wobei die vorstehenden Gruppenmitglieder halogeniert sein können, Wasser, anorganischen Säuren (wie z.B. H₃PO₄, H₂SO₄) und Gemische derselben eingesetzt.

Vorzugsweise werden C1-C10 Alkohole, C2-C5 Ketone, C1-C10-Alkane (aliphatische und cycloaliphatische), C2-C6-Ether (aliphatische und cycloaliphatische), C2-C5 Ester, C1-C3 Carbonsäuren, Dichlormethan, Wasser und Gemische derselben eingesetzt.

Nachfolgend wird die Faser von dem Fällungs-Flüssigkeit befreit. Dieses erfolgt vorzugsweise durch Trocknung, wobei die Temperatur und der Umgebungsdruck in Abhängigkeit vom Partial-Dampfdruck der Fällungs-Flüssigkeit gewählt wird. Üblicherweise erfolgt die Trocknung bei Normaldruck und Temperaturen zwischen 20°C und 200°C. Eine schonendere Trocknung kann auch im Vakuum erfolgen. Die Trocknungsmethode unterliegt keiner Einschränkung.

Die Behandlung im Fällungsbad kann zur Ausbildung von porösen Strukturen führen. Je nach Verwendung sind diese für die nachfolgende Verwendung erwünscht.

In einer Variante können die Fasern nach der Extrusion gemäß Schritt A) eine Behandlung der gebildeten Faser wie in Schritt B) beschrieben erfolgen. Diese Behandlung der Faser erfolgt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf bzw. und/oder wasserenthaltende Phosphorsäure von bis zu 85%. Die Behandlung erfolgt vorzugsweise unter Normaldruck, kann aber auch unter Einwirkung von Druck erfolgen. Wesentlich ist, dass die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Faser beiträgt.

Die partielle Hydrolyse der Polyphosphorsäure führt zu einer Verfestigung der Faser so dass diese selbsttragend wird und führt weiterhin zu einer Abnahme des Titers der Faser.

Die in der Polyphosphorsäureschicht vorliegenden intra- und intermolekularen Strukturen (Interpenetrierende Netzwerke IPN) führen zu einer geordneten Polymerstruktur, welche für die guten Eigenschaften der gebildeten Faser verantwortlich zeichnet.

Die obere Temperaturgrenze der Behandlung beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt B) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von der Dicke der Faser abhängig.

In der Regel beträgt die Behandlungsdauer zwischen wenigen Sekundenbruchteilen bis hin zu mehreren Sekunden, beispielsweise unter Einwirkung von überhitztem Wasserdampf, oder erhitzter feuchter Luft.

Grundsätzlich kann die Behandlung auch bei Raumtemperatur (20°C) mit Umgebungsluft einer relativen Luftfeuchtigkeit von 40-80% durchgeführt werden. Hierdurch verlängert sich jedoch die Behandlungsdauer.

Nachfolgend wird die Erfindung durch Beispiele weiter veranschaulicht, ohne dass hierdurch eine Beschränkung des Erfindungsgedankens erfolgen soll.

### Beispiel 1

Es wurden Lösungen von Poly(2,2'-(m-phenylen)-5,5'-bibenzimidazol) (=PBI) in Polyphosphorsäure (PPA) nach dem allgemein in der WO 02/088219 beschriebenen Verfahren hergestellt. Die Anteile des PBI sowie die Konzentration der Polyphosphorsäure, berechnet als P₂O₅ (acidimetrisch) bezogen auf die Gesamtmenge an H₃PO₄ und/oder Polyphosphorsäure und/oder Wasser, werden in der nachfolgenden Tabellen 1.1 und 1.2 zusammengefasst.

Die Lösungsviskositäten der Zusammensetzungen werden ebenfalls angegeben. Die entsprechenden Messungen wurden unter N₂-Atmosphäre mit einem schubspannungskontrolliertem Rotationsviskosimeter Physika MCR300 mittels einer Platte-Platte-Geometrie (obere Platte 025mm ; Abstand: 1 mm; alle Proben bei 30°C; Probe 4, 5 und 6 bei 150°C) oder einer Kegel-Platte-Geometrie (obere Platte Ø50mm - 2°; Spitzenabnahme: 0.053mm; Probe 1, 2 und 3 bei 150°C) durchgeführt.

Es ist klar ersichtlich, dass die Viskosität der erfindungsgemäßen Zusammensetzung unter gleichen Bedingungen und Feststoffgehalt erheblich niedriger ist, als die einer herkömmlichen PBI Lösung. Daraus resultiert ein erheblicher Vorteil für die Verarbeitung zu einer Membran.

**Tabelle 1.1: Messtemperatur 30°C**

| Probe | PBI [Gew.-%] | c(P₂O₅) in [%] | Lösungsviskosität in [Pa s] | |
|---|---|---|---|---|
| | | | Scherrate 1 Hz | Scherrate 100 Hz |
| 1⁺ | 0 | 83,29 | 15,7 | 15,4 |
| 2⁺ | 0 | 84,02 | 42,3 | 41,4 |
| 3⁺ | 0 | 84,74 | 70,0 | 67,5 |
| 4⁺ | 0 | 85,46 | 167,0 | 162,0 |
| 5 | 2,00 | 84,02 | 5770,0 | 292,0 |
| 6* | 2,22 | 72,43 | 449,0 | 42,7 |

| | | | | |
|---|---|---|---|---|
| ⁺: Monomerlösung für 2 Gew.-% Polymer *: erfindungsgemäß | | | | |

**Tabelle 1.2: Messtemperatur 150°C**

| Probe | PBI [Gew.-%] | c(P₂O₅) in [%] | Lösungsviskosität in [Pa s] | |
|---|---|---|---|---|
| | | | Scherrate 1 Hz | Scherrate 100 Hz |
| 1⁺ | 0 | 83,29 | 0,157 | 0,099 |
| 2⁺ | 0 | 84,02 | 0,201 | 0,186 |
| 3⁺ | 0 | 84,74 | 0,314 | 0,297 |
| 4⁺ | 0 | 85,46 | 0,888 | 0,778 |
| 5 | 2,00 | 84,02 | 399,000 | 31,300 |
| 6* | 2,22 | 72,43 | 11,600 | 5,430 |

| | | | | |
|---|---|---|---|---|
| ⁺: Monomerlösung für 2 Gew.-% Polymer *: erfindungsgemäß | | | | |

### Beispiel 2

Es wurde eine 2% Gew.-ige Lösung von Poly(2,2'-(m-phenylen)-5,5'-bibenzimidazol) (=PBI; intrinsische Viskosität= 5,65 dL/g) in Polyphosphorsäure (PPA; 83,4%, berechnet als P₂O₅ (acidimetrisch) bezogen auf die Gesamtmenge an H₃PO₄ und/oder Polyphosphorsäure und/oder Wasser) nach dem allgemein in der WO 02/088219 beschriebenen Verfahren hergestellt. Die Lösung wurde auf 240°C erwärmt und in einem HWS-Reaktor mit Rückflusskühler & Tropftrichter vorgelegt. Der Ansatz wurde mit Wasser verdünnt, wobei die Wassermenge derart gewählt wurde, dass die Gesamtmenge an H₃PO₄ und Polyphosphorsäure, berechnet als P₂O₅ (acidimetrisch) bezogen auf die Gesamtmenge an H₃PO₄ und/oder Polyphosphorsäure und/oder Wasser, 72,43% beträgt. Danach wird die Temperatur auf 180°C zurückgenommen. Der Verlauf der Lösungsviskosität mit der Zeit, ausgedrückt in relativen Einheiten, wird in der Tabelle 2 zusammengefasst. Es ist deutlich zu erkennen, dass die Viskosität der Lösung nach der Zugabe des Wassers bei 180°C nicht mehr ansteigt. Im Gegensatz dazu steigt die Lösungsviskosität herkömmlicher Lösungen, wie der der WO 02/088219, unter gleichen Bedingungen weiter an, bis sie letztendlich nicht mehr verarbeitbar sind. Die erfindungsgemäße Lösung ist nach der Zugabe von Wasser homogen.

**Tabelle 2: Verlauf der Lösungsviskosität**

| Zeitpunkt (min) | Lösungsviskosität (gemessen anhand des Krafteintrags des Rührers) (N/cm) |
|---|---|
| Beendigung der Wasserzugabe | |
| t=0 | 69,7 |
| t=60 | 69,6 |
| t=120 | 68,9 |
| t=180 | 68,8 |
| t=240 | 68,9 |
| t=300 | 69,3 |
| t=540 | 69,5 |
| t=840 | 70,4 |

### Beispiel 3

Durchführung wie in Beispiel 2 mit einer 2,5 Gew.-%igen Lösung. Der Verlauf der Lösungsviskosität mit der Zeit, ausgedrückt in relativen Einheiten, wird in der Tabelle 3 zusammengefasst. Deutlich zu erkennen ist die Abnahme der Viskosität der Lösung nach Wasserzugabe und Verdünnung sowie die Einstellung eines Plateaus ohne weitere Zunahme der Lösungsviskosität der Lösung. Ohne Zugabe von Wasser wäre die Viskosität weiter angestiegen.

**Tabelle 3**

| Zeitpunkt (min) | Lösungsviskosität (gemessen anhand des Krafteintrags des Rührers) (N/cm) |
|---|---|
| t=0 | 0 (Kalibrierung, Temperatur 195°C) |
| t=30 | 0 |
| t=60 | 0 |
| t=120 | 0,5 |

| Erhöhung Temperatur 240°C (Reaktion) | |
|---|---|
| t=180 | 0,6 |
| t=200 | 9,0 |
| t=205 | 20,4 |
| t=210 | 45,7 |
| t=215 | 85,5 |
| t=220 | 103,5 |

| Zugabe VE-Wasser, Temperaturabsenkung auf 200°C | |
|---|---|
| t=230 | 121,8 |
| t=260 | 67,2 |
| t=290 | 37,7 |
| t=320 | 27,1 |
| t=350 | 22,3 |
| t=380 | 21,0 |
| t=440 | 19,6 |
| t=545 | 19,1 |

### Beispiel 4

Durchführung wie in Beispiel 2 mit einer 2,5 Gew.-%igen Lösung. Der Verlauf der Lösungsviskosität mit der Zeit, ausgedrückt in relativen Einheiten, wird in der Tabelle 4 zusammengefasst. Man erkennt deutlich den Abfall der Lösungsviskosität nach Zugabe des Wassers. Ohne Verdünnung wäre die Lösung zu viskos für eine Verarbeitung und müsste entsorgt werden. Außerdem können so Lösungen, die in einem Reaktor eine zu hohe Viskosität erreichen, wieder verarbeitbar gemacht werden. Dies spart aufwendige Reinigungsprozeduren für Kessel, Ausfallzeiten werden vermieden und Beschädigungen von Reaktoren durch mechanische Reinigung können vermieden werden.

**Tabelle 4**

| Zeitpunkt (min) | Lösungsviskosität (gemessen anhand des Krafteintrags des Rührers) (N/cm) |
|---|---|
| t=0 (17h40min) | 0 (Kalibrierung, Temperatur 195°C) |
| t=60 (18h40min) | 0,5 |
| t=120 (19h40min) | 1,5 |

| Erhöhung Temperatur 240°C (Reaktion) | |
|---|---|
| t=180 (20h40min) | 1,5 |
| t=210 (21h10min) | 21,9 |
| t=220 (21h20min) | 51,5 |
| t=230 (21h30min) | 84,8 |
| t=240 (21h40min) | 103,5 |

| Zugabe VE-Wasser, Temperaturabsenkung auf 200°C | |
|---|---|
| t=250 (21h50min) | 96,0 |
| t=280 (22h20min) | 86,3 |
| t=290 (22h30min) | 61,2 |
| t=320 (23h00min) | 67,7 |
| t=380 (24h00min) | 43,7 |
| t=440 (25h00min) | 22,0 |
| T=455 (25h15min) | 23,4 |
| T=470 (25h30min) | 23,7 |

## Patentansprüche

1. Zusammensetzung in Form einer Lösung und/oder Dispersion, umfassend
o mindestens ein Polyazol mit einer intrinsischen Viskosität im Bereich von 3,0 bis 8,0 g/dL, wobei die inhärenten Viskosität in mindestens 96 %iger Schwefelsäure bei 25°C und bei einer Konzentration von 100 mg bei 160°C für 2h getrocknetem Polymer in 100 ml mindestens 96 %iger Schwefelsäure gemessen wird, und
∘ ortho-Phosphorsäure und/oder Polyphosphorsäure,
**dadurch gekennzeichnet, dass**
▪ der Gehalt an Polyazol, bezogen auf das Gesamtgewicht der Zusammensetzung, im Bereich von 0,5 Gew.-% bis 30,0 Gew.-% liegt,
▪ der Gehalt an H₃PO₄ und/oder Polyphosphorsäure, bezogen auf das Gesamtgewicht der Zusammensetzung, im Bereich von 30,0 Gew.-% bis 99,5 Gew.-% liegt,
▪ die Konzentration der H₃PO₄ und/oder Polyphosphorsäure, berechnet als P₂O₅ (acidimetrisch), bezogen auf die Gesamtmenge an H₃PO₄ und/oder Polyphosphorsäure und/oder Wasser, im Bereich von 70,5 % bis 74,0 % liegt.

2. Zusammensetzung nach Anspruch 1, **dadurch gekennzeichnet, dass** sie eine Lösungsviskosität, gemessen bei einer Temperatur von 150°C und einer Scherrate von 1 Hz, im Bereich von 0,1 Pas bis 300 Pas aufweist.

3. Zusammensetzung nach Anspruch 1, **dadurch gekennzeichnet, dass** das Polyazol wiederkehrende Benzimidazoleinheiten umfasst.

4. Verfahren zur Herstellung einer Zusammensetzung gemäß mindestens einem der vorangehenden Ansprüche, **dadurch gekennzeichnet, dass** man
a) mindestens ein Polyazol in ortho-Phosphorsäure und/oder Polyphosphorsäure auflöst und/oder dispergiert, wobei man die Konzentration der H₃PO₄ und/oder Polyphosphorsäure, berechnet als P₂O₅ bezogen auf die Gesamtmenge an H₃PO₄ und/oder Polyphosphorsäure und/oder Wasser, kleiner 72,0 % wählt, und
b) Wasser aus der Lösung oder Dispersion aus Schritt a) entfernt und die Konzentration der H₃PO₄ und/oder Polyphosphorsäure, berechnet als P₂O₅ bezogen auf die Gesamtmenge an H₃PO₄ und/oder Polyphosphorsäure und/oder Wasser erhöht.

5. Verfahren nach Anspruch 4, **dadurch gekennzeichnet, dass** die Entfernung von Wasser durch Verdampfen erfolgt.

6. Verfahren nach Anspruch 4 oder 5, **dadurch gekennzeichnet, dass** man die Lösung aus Schritt a) durch Hydrolyse einer Lösung erhält, die mindestens ein Polyazol und Polyphosphorsäure umfasst.

7. Verfahren nach Anspruch 4, 5 oder 6, **dadurch gekennzeichnet, dass** die einzusetzende Lösung, bezogen auf ihr Gesamtgewicht,
- mindestens 1,8 Gew.-% mindestens eines Polyazols mit einer intrinsischen Viskosität, gemessen in mindestens 96 Gew.-%-iger Schwefelsäure, im Bereich von 3,0 bis 8 g/dL und
- 90,0 Gew.-% bis 98,2 Gew.-% Polyphosphorsäure umfasst.

8. Verfahren zur Herstellung einer Zusammensetzung gemäß mindestens einem der Ansprüche 1 bis 3, **dadurch gekennzeichnet, dass** man
i) eine Lösung oder Dispersion eines Polyazols mit einer intrinsischen Viskosität, gemessen in mindestens 96 Gew.-%-iger Schwefelsäure, im Bereich von 3,0 bis 8,0 g/dL, in Polyphosphorsäure bei einer Temperatur größer 160°C vorlegt, wobei die Konzentration an H₃PO₄ und/oder Polyphosphorsäure, berechnet als P₂O₅ (acidimetrisch) bezogen auf die Gesamtmenge an H₃PO₄ und/oder Polyphosphorsäure und/oder Wasser, größer 72,4 % ist,
ii) Wasser, ortho-Phosphorsäure und/oder Polyphosphorsäure zu der Lösung oder Dispersion zugibt, bis das Gemisch eine Gesamtmenge an H₃PO₄ und/oder Polyphosphorsäure, berechnet als P₂O₅ (acidimetrisch) bezogen auf die Gesamtmenge an H₃PO₄ und/oder Polyphosphorsäure und/oder Wasser, im Bereich von 70,5 % bis 74,0 % aufweist,
iii) das Gemisch homogenisiert, wobei man die Gesamtmenge an H₃PO₄ und/oder Polyphosphorsäure in dem in Schritt ii) genannten Bereich hält.

9. Verfahren zur Herstellung eines beschichteten Substrats, bei welchem man eine Zusammensetzung gemäß mindestens einem der Ansprüche 1 bis 3 auf ein Substrat aufbringt.

10. Verfahren nach Anspruch 9, **dadurch gekennzeichnet, dass** man eine flächige Elektrode beschichtet.

11. Verfahren nach Anspruch 9 oder 10, **dadurch gekennzeichnet, dass** man
I) das Substrat auf einem Träger vorlegt,
II) eine Matrix mit mindestens einer Aussparung über dem Substrat derart positioniert, dass die zu beschichtende Fläche von der Matrix nicht bedeckt wird,
III) das Substrat mit der Lösung durch Rakeln beschichtet,
IV) das beschichtete Substrat von der Matrix und dem Träger ablöst.

12. Verfahren nach mindestens einem der Ansprüche 9 bis 11, **dadurch gekennzeichnet, dass** die Beschichtung bei einer Temperatur kleiner 160°C erfolgt.

13. Verfahren nach mindestens einem der Ansprüche 9 bis 12, **dadurch gekennzeichnet, dass** man das beschichtete Substrat einer Feuchtigkeitsbehandlung unterzieht.

14. Verfahren nach mindestens einem der Ansprüche 9 bis 13, **dadurch gekennzeichnet, dass** man die Beschichtung vernetzt.

15. Verfahren nach mindestens einem der Ansprüche 9 bis 14, **dadurch gekennzeichnet, dass** man das beschichtete Substrat mit einem weiteren Substrat verpresst.

16. Verfahren zur Herstellung einer Polymerfaser, umfassend die Schritte
A) Extrusion einer Zusammensetzung gemäß Anspruch 1, 2 und/oder 3 unter Ausbildung von Fasern,
B) Einbringen der in Schritt B) gebildeten Fasern in ein Flüssigkeitsbad,
C) Isolieren und Trocknen der erhaltenen Fasern.

17. Verfahren nach Anspruch 16, **dadurch gekennzeichnet, dass** die in Schritt A) gebildeten Fasern in ein Fällungsbad eingebracht werden.

18. Verfahren nach Anspruch 16 oder 17, **dadurch gekennzeichnet, dass** die in Schritt A) extrudierte Zusammensetzung mit einem Gas gesättigt wird, vorzugsweise im überkritischen Zustand, so dass das Gas bei der nachfolgenden Expansion Poren bildet.

## Claims

1. A composition in the form of a solution and/or dispersion, comprising
o at least one polyazole with an intrinsic viscosity, in the range from 3.0 to 8.0 g/dl wherein the intrinsic viscosity is measured in at least 96 % sulfuric acid at 25°C and at a concentration of 100 mg of polymer, dried at 160°C for 2 h, in 100 ml of at least 96 % sulfuric acid, and
∘ orthophosphoric acid and/or polyphosphoric acid,
wherein
▪ the polyazole content, based on the total weight of the composition, is in the range from 0.5% by weight to 30.0% by weight,
▪ the H₃PO₄ and/or polyphosphoric acid content, based on the total weight of the composition, is in the range from 30.0% by weight to 99.5% by weight,
▪ the H₃PO₄ and/or polyphosphoric acid concentration, calculated as P₂O₅ (by acidimetric means), based on the total amount of H₃PO₄ and/or polyphosphoric acid and/or water, is in the range from 70.5% to 74,0%.

2. The composition according to claim 1, which has a solution viscosity, measured at a temperature of 150°C and a shear rate of 1 Hz, in the range from 0.1 Pas to 300 Pas.

3. The composition according to claim 1, wherein the polyazole comprises repeating benzimidazole units.

4. A process for preparing a composition according to at least one of the preceding claims, which comprises
a) dissolving and/or dispersing at least one polyazole in orthophosphoric acid and/or polyphosphoric acid, the selected concentration of the H₃PO₄ and/or polyphosphoric acid, calculated as P₂O₅ based on the total amount of H₃PO₄ and/or polyphosphoric acid and/or water, being less than 72.0%, and
b) removing water from the solution or dispersion from step a) and increasing the concentration of the H₃PO₄ and/or polyphosphoric acid, calculated as P₂O₅ based on the total amount of H₃PO₄ and/or polyphosphoric acid and/or water.

5. The process according to claim 4, wherein water is removed by evaporation.

6. The process according to claim 4 or 5, wherein the solution from step a) is obtained by hydrolysis of a solution comprising at least one polyazole and polyphosphoric acid.

7. The process according to claim 4, 5 or 6, wherein the solution to be used, based on the total weight thereof, comprises
- at least 1.8% by weight of at least one polyazole with an intrinsic viscosity, measured in at least 96% by weight sulfuric acid, in the range from 3.0 to 8 g/dl and
- 90.0% by weight to 98.2% by weight of polyphosphoric acid.

8. A process for preparing a composition according to at least one of claims 1 to 3, which comprises
i) initially charging a solution or dispersion of a polyazole with an intrinsic viscosity, measured in at least 96% by weight sulfuric acid, in the range from 3.0 to 8.0 g/dl, in polyphosphoric acid at a temperature greater than 160°C, the concentration of H₃PO₄ and/or polyphosphoric acid, calculated as P₂O₅ (by acidimetric means), based on the total amount of H₃PO₄ and/or polyphosphoric acid and/or water, being greater than 74,0%,
ii) adding water, orthophosphoric acid and/or polyphosphoric acid to the solution or dispersion until the mixture has a total amount of H₃PO₄ and/or polyphosphoric acid, calculated as P₂O₅ (by acidimetric means), based on the total amount of H₃PO₄ and/or polyphosphoric acid and/or water, in the range from 70.5% to 75.45%,
iii) homogenizing the mixture, keeping the total amount of H₃PO₄ and/or polyphosphoric acid within the range specified in step ii).

9. A process for producing a coated substrate, in which a composition according to at least one of claims 1 to 3 is applied to a substrate.

10. The process according to claim 9, wherein a flat electrode is coated.

11. The process according to claim 9 or 10, wherein
I) the substrate is placed on a carrier,
II) a matrix with at least one cutout is positioned over the substrate such that the area to be coated is not covered by the matrix,
III) the substrate is coated with the solution by knife coating,
IV) the coated substrate is detached from the matrix and the carrier.

12. The process according to at least one of claims 9 to 11, wherein the coating is effected at a temperature less than 160°C.

13. The process according to at least one of the claims 9 to 12 , wherein the coated substrate is subjected to a moisture treatment.

14. The process according to at least one of the claims 9 to 13, wherein the coating is crosslinked.

15. The process according to at least one of the claims 9 to 14, wherein the coated substrate is compressed with a further substrate.

16. A process for producing a polymer fiber, comprising the steps of
A) extruding a composition according to claims 1, 2 and/or 3 to form fibers,
B) introducing the fibers formed in step B) into a liquid bath,
C) isolating and drying the resulting fibers.

17. The process according to claim 16, wherein the fibers formed in step A) are introduced into a precipitation bath.

18. The process according to claim 16 or 17, wherein the composition extruded in step A) is saturated with a gas, preferably in the supercritical state, such that the gas forms pores in the subsequent expansion.

## Revendications

1. Composition sous forme d'une solution ou dispersion comprenant
o au moins un polyazole avec une viscosité intrinsèque de 3,0 à 8,0 g/dL, la viscosité inhérente étant mesurée dans de l'acide sulfurique d'au moins 96 % à 25 °C et à une concentration de 100 mg à 160 °C pour 2h de polymère sec dans 100 ml d'acide sulfurique d'au moins 96 %, et
o de l'acide orthophosphorique ou de l'acide polyphosphorique,
**caractérisé en ce que**
▪ la teneur en polyazole, par rapport au poids total de la composition, est comprise entre 0,5 et 30,0 % en poids,
▪ la teneur en H₃PO₄ ou acide polyphosphorique, par rapport au poids total de la composition, est comprise entre 30,0 et 99,5 % en poids,
▪ la concentration du H₃PO₄ ou acide polyphosphorique, calculé sous la forme P₂O₅ (acidimétrique), par rapport à la quantité totale de H₃PO₄ ou d'acide polyphosphorique ou d'eau, est comprise entre 70,5 et 74,0 % en poids.

2. Composition selon la revendication 1, **caractérisée en ce qu'**elle présente une viscosité en solution, mesurée à une température de 150 °C et à un taux de cisaillement de 1 Hz, comprise entre 0,1 Pas et 300 Pas.

3. Composition selon la revendication 1, **caractérisée en ce que** le polyazole comprend des unités récurrentes de benzimidazole.

4. Procédé de production d'une composition selon au moins l'une des revendications précédentes, **caractérisé en ce que** l'on
a) dissout ou disperse au moins un polyazole dans de l'acide orthophosphorique ou de l'acide polyphosphorique, la concentration du H₃PO₄ ou acide polyphosphorique, calculée sous la forme P₂O₅ par rapport à la quantité totale de H₃PO₄ ou d'acide polyphosphorique ou d'eau, étant choisie sous 72,0 %, et
b) que l'on retire de l'eau de la solution ou dispersion obtenue en a), puis augmente la concentration du H₃PO₄ ou acide polyphosphorique, calculé sous la forme P₂O₅, par rapport à la quantité totale de H₃PO₄ ou d'acide polyphosphorique ou d'eau.

5. Procédé selon la revendication 4, **caractérisée en ce que** l'eau est extraite par évaporation.

6. Procédé selon les revendications 4 ou 5, **caractérisé en ce que** l'on obtient la solution en a) par hydrolyse d'une autre solution comprenant au moins un polyazole et acide polyphosphorique.

7. Procédé selon les revendications 4, 5 ou 6, **caractérisé en ce que**, par rapport à son poids total, la solution à utiliser
- comprend au moins 1,8 % en poids d'au moins un polyazole avec une viscosité intrinsèque mesurée dans un acide sulfurique d'au moins 96 % comprise entre 3,0 et 8 g/dL, et
- 90,0 à 98,2 % en poids d'acide polyphosphorique.

8. Procédé de production d'une composition selon au moins l'une des revendications 1 à 3, **caractérisé en ce que** l'on
i) met une solution ou dispersion d'un polyazole avec une viscosité intrinsèque mesurée dans un acide sulfurique d'au moins 96 % comprise entre 3,0 et 8 g/dL, dans de l'acide polyphosphorique à une température de 160 °C, la concentration du H₃PO₄ ou acide polyphosphorique, calculé sous la forme P₂O₅ (acidimétrique), par rapport à la quantité totale de H₃PO₄ ou d'acide polyphosphorique ou d'eau, étant supérieure à 72,4 % en poids,
ii) ajoute de l'eau, de l'de l'acide orthophosphorique ou de l'acide polyphosphorique à la solution ou dispersion jusqu'à ce que le mélange présente une quantité totale de H₃PO₄ ou d'acide polyphosphorique, calculé sous la forme P₂O₅ (acidimétrique), par rapport à la quantité totale de H₃PO₄ ou d'acide polyphosphorique ou d'eau, comprise entre 70,5 et 74,0 % en poids,
iii) homogénéise le mélange en maintenant la quantité totale de H₃PO₄ ou d'acide polyphosphorique au niveau mentionné à l'étape ii).

9. Procédé de production d'un substrat revêtu au cours duquel on applique une composition selon au moins l'une des revendications 1 à 3 sur un substrat.

10. Procédé selon la revendication 9, **caractérisé en ce que** l'on recouvre une électrode plate.

11. Procédé selon les revendications 9 ou 10, **caractérisé en ce que** l'on
I) pose le substrat sur un support,
II) positionne une matrice avec au moins une cavité sur un substrat de façon à ce que la surface à revêtir de la matrice ne soit pas recouverte,
III) revêtit le substrat avec la solution par raclement,
IV) décolle le substrat revêtu de la matrice et du support.

12. Procédé selon au moins l'une des revendications 9 à 11, **caractérisé en ce que** le revêtement est effectuée à une température inférieure à 160 °C.

13. Procédé selon au moins l'une des revendications 9 à 12, **caractérisé en ce que** le substrat revêtu est soumis à un traitement hydratant.

14. Procédé selon au moins l'une des revendications 9 à 13, **caractérisé en ce que** l'on maille le revêtement.

15. Procédé selon au moins l'une des revendications 9 à 14, **caractérisé en ce que** le substrat revêtu est pressé avec un autre substrat supplémentaire.

16. Procédé de production d'une fibre polymère comprenant les étapes
A) Extrusion d'une composition selon les revendications 1, 2 ou 3 et formation de fibres,
B) Application des fibres formées à l'étape B) dans un bain liquide,
C) Isolation et séchage des fibres obtenues.

17. Procédé selon la revendication 16, **caractérisé en ce que** les fibres formées à l'étape A) sont mises dans un bain de précipitation.

18. Procédé selon les revendications 16 ou 17, **caractérisé en ce que** la composition extrudée à l'étape A) est saturée avec un gaz, idéalement à l'état supercritique, de façon à ce que le gaz forme des pores lors de l'expansion subséquente.
